# EUROPEAN PATENT APPLICATION

(11) **EP 4 745 424 A1**
(43) Date of publication of application: **20.05.2026**
(21) Application number: 24839560.0
(22) Date of filing: 01.07.2024
(51) Int. Cl.: F16D 65/00, F16D 65/02, F16D 65/18, F16D 125/06, F16D 125/08

(54) **DISC BRAKE**

(30) Priority: 10.07.2023 JP 2023112784
(71) Applicant: Astemo, Ltd., Chiyoda-ku, Tokyo 1000004 (JP)
(72) Inventor: MICHIBA Masaki, Hitachinaka-shi, Ibaraki 312-8503 (JP); ENDOU Takafumi, Hitachinaka-shi, Ibaraki 312-8503 (JP); UEHARA Kazumasa, Hitachinaka-shi, Ibaraki 312-8503 (JP); MACHIDA Yuji, Hitachinaka-shi, Ibaraki 312-8503 (JP); ENOKIMOTO Yu, Hitachinaka-shi, Ibaraki 312-8503 (JP); HATAKOSHI Genichi, Hitachinaka-shi, Ibaraki 312-8503 (JP)
(74) Representative: Hoefer & Partner Patentanwälte mbB
(86) International application number: PCT/JP2024/023706
(87) International publication number: WO 2025/013668

(57) **Abstract**

This disc brake makes it possible to stabilize the position of a dust seal in a dust seal mounting groove and stabilize the roll-back amount of a piston while minimizing costs. A dust seal mounting groove 8 has: a cylinder hole opening-side surface 8a and a cylinder hole bottom-side surface 8b formed in a direction intersecting a cylinder axis CL1; and a mounting groove bottom surface 8c formed between the cylinder hole bottom-side surface 8b and the cylinder hole opening-side surface 8a. The mounting groove bottom surface 8c constitutes a regulating section and is formed as a conical surface in which the inner diameter around the cylinder axis CL1 of the dust seal mounting groove 8 gradually decreases toward the cylinder hole opening-side surface 8a. A separation section E1 in which a tip surface 10b and the cylinder hole opening-side surface 8a do not abut each other when not operating is provided between the tip surface 10b and the cylinder hole opening-side surface 8a.

## Description

### Technical Field

The present invention relates to a disc brake, and more particularly to a disc brake in which a dust seal for preventing dust from entering a cylinder hole accommodating a piston is mounted in the cylinder hole.

### Background Art

In the related art, there is a disc brake in which a dust seal mounting groove is formed on an opening side of a cylinder hole provided in a caliper body, and a dust seal formed by an O-ring that abuts against an outer peripheral surface of a piston and prevents dust from entering the cylinder hole is mounted in the dust seal mounting groove (for example, see PTL 1).

### Citation List

### Patent Literature

PTL 1: JP6567926B

### Summary of Invention

### Technical Problem

In general, in the dust seal mounting groove, a length dimension in a cylinder axial direction is made larger than a length dimension of the dust seal in the cylinder axial direction in consideration of thermal expansion of the dust seal, but due to this margin, a position of the dust seal cannot be stabilized, and a roll-back amount of the piston becomes unstable.

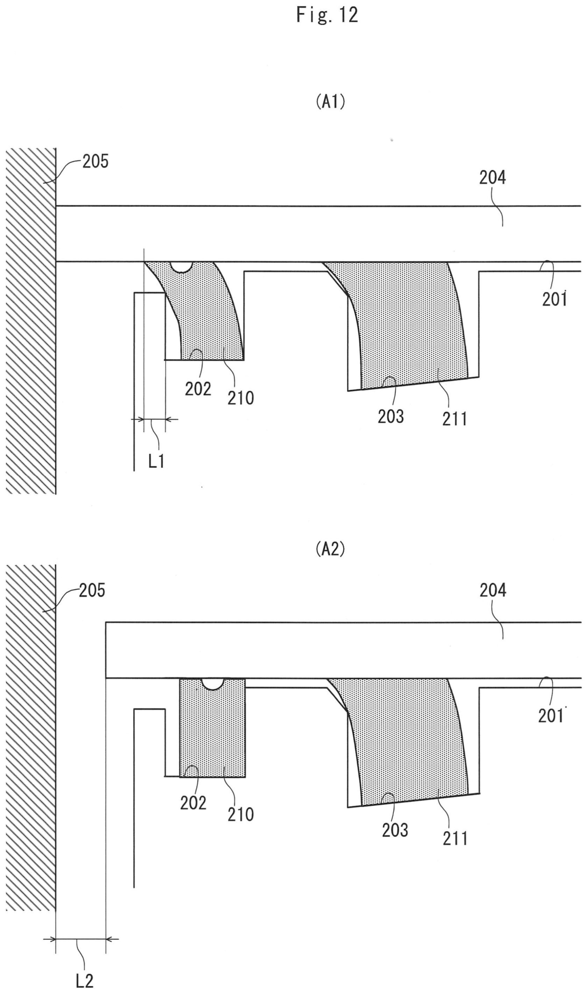

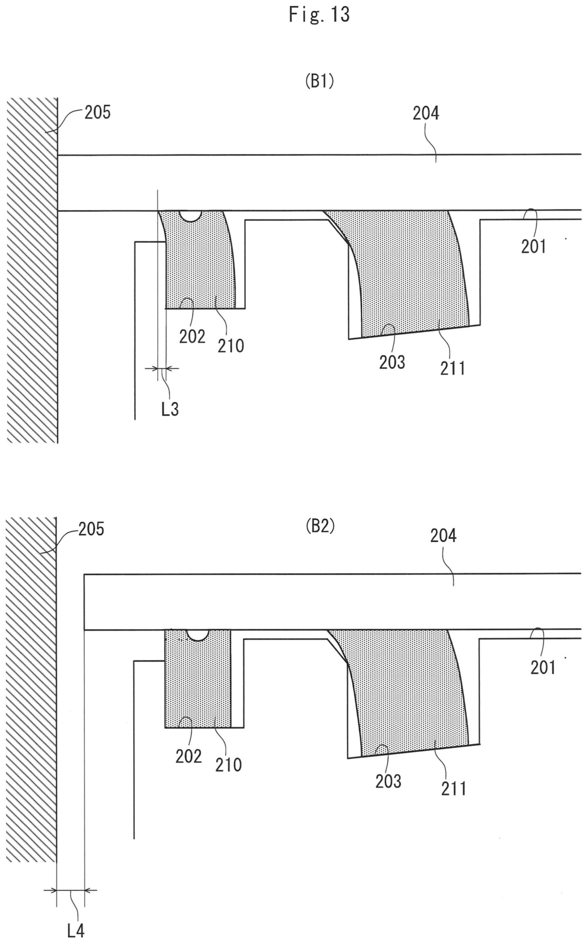

Specifically, as shown in FIGS. 12 and 13, a disc brake will be described in which a dust seal mounting groove 202 and a piston seal mounting groove 203 are formed in a cylinder hole 201, a dust seal 210 is mounted in the dust seal mounting groove 202, a piston seal 211 is mounted in the piston seal mounting groove 203, and a piston 204 inserted into the cylinder hole 201 is operated to push a friction pad 205.

As shown in FIG. 12, when the dust seal 210 is mounted on a cylinder hole bottom side of the dust seal mounting groove 202, during braking, the dust seal 210 is dragged by the piston 204 and protrudes from the dust seal mounting groove 202 to a cylinder hole opening side by a large amount (protrusion amount: L1) as shown in (A1) of FIG. 12. Accordingly, as shown in (A2) of FIG. 12, a roll-back amount L2 of the piston 204 at the time of braking release increases.

On the other hand, as shown in FIG. 13, when the dust seal 210 is mounted on the cylinder hole opening side of the dust seal mounting groove 202, the dust seal 210 is dragged by the piston 204 and protrudes from the dust seal mounting groove 202 to the cylinder hole opening side during braking as shown in (B1) of FIG. 13, but a protrusion amount L3 is smaller than the protrusion amount L1 when the dust seal 210 is mounted on the cylinder hole bottom side of the dust seal mounting groove 202. Accordingly, as shown in (B2) of FIG. 13, a roll-back amount L4 of the piston 204 at the time of braking release is smaller than the roll-back amount L2 when the dust seal 210 is mounted on the cylinder hole bottom portion side of the dust seal mounting groove 202.

As described above, since the roll-back amount of the piston 204 changes depending on a mounting position of the dust seal 210, it is necessary to adopt a method of stabilizing the mounting position of the dust seal 210 and stabilizing the roll-back amount, which may increase costs.

Therefore, an object of the invention is to provide a disc brake capable of stabilizing a position of a dust seal in a dust seal mounting groove and stabilizing a roll-back amount of a piston while minimizing costs.

### Solution to Problem

In order to achieve the above object, a dust seal mounting groove formed in a cylinder hole of a disc brake of the invention has a cylinder hole opening-side surface and a cylinder hole bottom-side surface formed in a direction intersecting a cylinder axis, and a mounting groove bottom surface formed between the cylinder hole bottom-side surface and the cylinder hole opening-side surface, when the disc brake is not in operation, a dust seal is mounted at a position separated from at least one of the cylinder hole opening-side surface and the cylinder hole bottom-side surface, and the dust seal mounting groove is provided with a regulating section that regulates a movement of the dust seal in a cylinder axial direction.

### Advantageous Effects of Invention

According to the disc brake of the invention, by providing the regulating section in the dust seal groove, it is possible to stabilize the position of the dust seal in the dust seal mounting groove and stabilize a roll-back amount of a piston while minimizing the costs. In addition, since when the disc brake is not in operation, the dust seal is mounted at a position separated from any one of the cylinder hole opening-side surface and the cylinder hole bottom-side surface, the roll-back amount can be freely set in consideration of a protrusion amount of the dust seal during braking which changes according to the mounting position of the dust seal.

### Brief Description of Drawings

[FIG. 1] FIG. 1 is a schematic cross-sectional view of a main part of a disc brake showing a first embodiment of the invention.
[FIG. 2] FIG. 2 is a cross-sectional view of the same disc brake.
[FIG. 3] FIG. 3 is a schematic cross-sectional view of a main part of a disc brake showing a second embodiment of the invention.
[FIG. 4] FIG. 4 is a schematic cross-sectional view of a main part of a disc brake showing a third embodiment of the invention.
[FIG. 5] FIG. 5 is a schematic cross-sectional view of a main part of a disc brake showing a fourth embodiment of the invention.
[FIG. 6] FIG. 6 is a schematic cross-sectional view of a main part of a disc brake showing a fifth embodiment of the invention.
[FIG. 7] FIG. 7 is a schematic cross-sectional view of a main part of a disc brake showing a sixth embodiment of the invention.
[FIG. 8] FIG. 8 is a schematic cross-sectional view of a main part of a disc brake showing a seventh embodiment of the invention.
[FIG. 9] FIG. 9 is a schematic cross-sectional view of a main part of a disc brake showing an eighth embodiment of the invention.
[FIG. 10] FIG. 10 is a schematic cross-sectional view of a main part of a disc brake showing a ninth embodiment of the invention.
[FIG. 11] FIG. 11 is a schematic cross-sectional view of a main part of a disc brake showing a tenth embodiment of the invention.
[FIG. 12] FIG. 12 is a schematic cross-sectional view of a main part of a disc brake in the related art.
[FIG. 13] FIG. 13 is a schematic cross-sectional view of a main part of a disc brake in the related art.

### Description of Embodiments

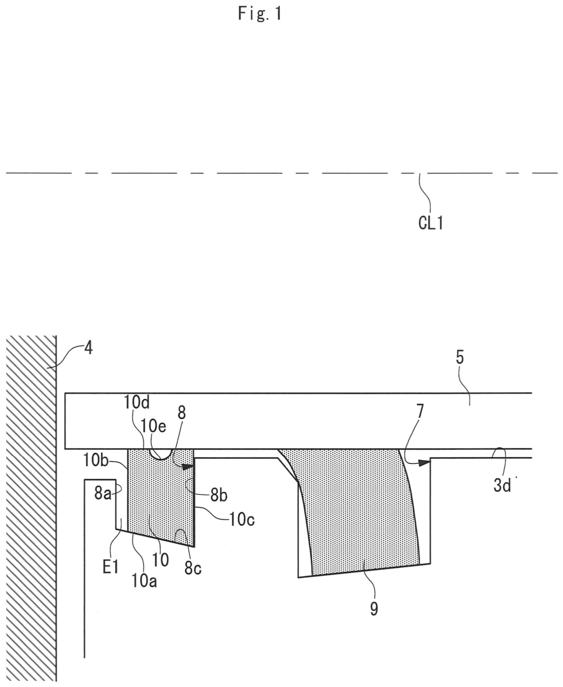

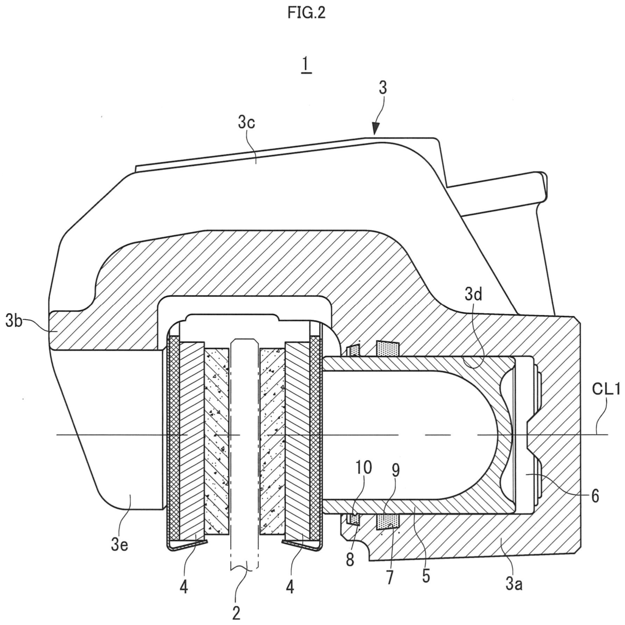

FIGS. 1 and 2 are views showing a first embodiment of a disc brake of the invention. A disc brake 1 includes a disc rotor 2 that rotates integrally with a wheel (not shown), a caliper body 3 that is attached to a vehicle body at one side portion of the disc rotor 2, and a pair of friction pads 4, 4 that are disposed to face each other with the disc rotor 2 interposed therebetween.

The caliper body 3 includes an action portion 3a and a reaction portion 3b which are disposed to face each other on both sides of the disc rotor 2, and a bridge portion 3c which straddles an outer periphery of the disc rotor 2 and couples the action portion 3a and the reaction portion 3b. The action portion 3a is provided with a cylinder hole 3d in which a piston 5 is accommodated, and the reaction portion 3b is provided with a reaction force claw 3e. A hydraulic pressure chamber 6 is formed between the cylinder hole 3d and a bottom of the piston 5.

On an inner peripheral surface of the cylinder hole 3d, an annular piston seal mounting groove 7 is provided at an axial center portion, and an annular dust seal mounting groove 8 is provided closer to a cylinder hole opening side than the piston seal mounting groove 7. A piston seal 9 that abuts against an outer peripheral surface of the piston 5 and rolls back the piston 5 by a restoring force thereof is mounted in the piston seal mounting groove 7. A dust seal 10 that abuts against the outer peripheral surface of the piston 5 and prevents dust from entering the cylinder hole 3d is mounted in the dust seal mounting groove 8.

The dust seal mounting groove 8 has a cylinder hole opening-side surface 8a and a cylinder hole bottom-side surface 8b formed in a direction intersecting a cylinder axis CL1, and a mounting groove bottom surface 8c formed between the cylinder hole bottom-side surface 8b and the cylinder hole opening-side surface 8a. In the present embodiment, the mounting groove bottom surface 8c serves as a regulating section that regulates a movement of the dust seal 10 in a cylinder axial direction, and is formed as a conical surface in which an inner diameter of the dust seal mounting groove 8 around the cylinder axis CL1 gradually decreases toward the cylinder hole opening-side surface 8a.

The dust seal 10 is formed of a square ring having a rectangular cross section in which an outer peripheral surface 10a abutting against the mounting groove bottom surface 8c, a tip surface 10b facing the cylinder hole opening-side surface 8a, a rear end surface 10c facing the cylinder hole bottom-side surface 8b, and a piston abutting surface 10d abutting against the piston 5 are flat surfaces. Further, an annular recess 10e is formed in a cylinder axial center portion of the piston abutting surface 10d.

The rear end surface 10c of the dust seal 10 is abutted against the cylinder hole bottom-side surface 8b, when the disc brake 1 is not in operation, the tip surface 10b is in a state of being separated from the cylinder hole opening-side surface 8a, and a separation section E1 is formed between the tip surface 10b and the cylinder hole opening-side surface 8a. Further, since the mounting groove bottom surface 8c is formed as the conical surface as described above, a cylinder hole opening side of the dust seal 10 is in a state of being compressed between the piston 5 and the mounting groove bottom surface 8c, and the outer peripheral surface 10a of the dust seal 10 and the mounting groove bottom surface 8c of the dust seal mounting groove 8 are in close contact with each other. Accordingly, the movement of the dust seal 10 in the cylinder axial direction is regulated.

In this manner, since the movement of the dust seal 10 in the cylinder axial direction in the dust seal mounting groove 8 is regulated by forming the mounting groove bottom surface 8c as the conical surface, a roll-back amount of the piston 5 can be stabilized while minimizing costs. Further, even if the dust seal 10 thermally expands, the separation section E1 can maintain a good mounting state to the dust seal mounting groove 8. Further, since the separation section E1 is formed between the tip surface 10b of the dust seal 10 and the cylinder hole opening-side surface 8a, when the disc brake 1 is in operation, the dust seal 10 is dragged by the piston 5 and protrudes from the dust seal mounting groove 8 toward the cylinder hole opening side by a large amount. Accordingly, the roll-back amount of the piston 5 can be increased by the dust seal 10 as well as the piston seal 9.

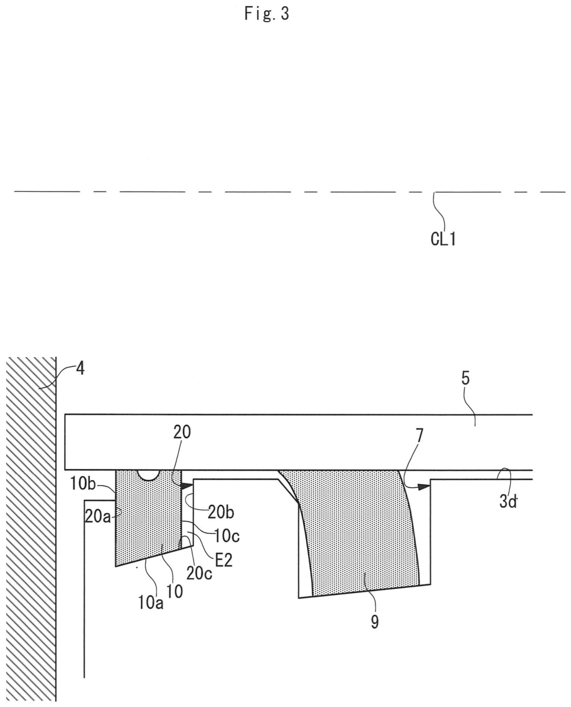

Since FIGS. 3 to 11 show other embodiments of the invention, the same elements as those in the first embodiment are denoted by the same reference signs, respectively, and the detailed description thereof will be omitted.

FIG. 3 shows a second embodiment of the invention. A dust seal mounting groove 20 has a cylinder hole opening-side surface 20a and a cylinder hole bottom-side surface 20b formed in the direction intersecting the cylinder axis CL1, and a mounting groove bottom surface 20c formed between the cylinder hole bottom-side surface 20b and the cylinder hole opening-side surface 20a. In the present embodiment, the mounting groove bottom surface 20c constitutes the regulating section, and is formed as a conical surface in which an inner diameter of the dust seal mounting groove 20 around the cylinder axis CL1 gradually decreases toward the cylinder hole bottom-side surface 20b, contrary to the first embodiment.

The tip surface 10b of the dust seal 10 is abutted against the cylinder hole opening-side surface 20a, when the disc brake 1 is not in operation, the rear end surface 10c is in a state of being separated from the cylinder hole bottom-side surface 20b, and a separation section E2 is formed between the rear end surface 10c and the cylinder hole bottom-side surface 20b. A cylinder hole bottom side of the dust seal 10 is in a state of being compressed between the piston 5 and the mounting groove bottom surface 20c, and the outer peripheral surface 10a of the dust seal 10 and the mounting groove bottom surface 20c of the dust seal mounting groove 20 are in close contact with each other. Accordingly, the movement of the dust seal 10 in the cylinder axial direction is regulated.

Further, in the present embodiment, since the separation section E2 is formed between the rear end surface 10c of the dust seal 10 and the cylinder hole bottom-side surface 20b, when the disc brake 1 is in operation, the dust seal 10 is dragged by the piston 5 and protrudes from the dust seal mounting groove 20 toward the cylinder hole opening side by a small amount. Accordingly, the roll-back amount of the piston 5 increased by the dust seal 10 is smaller than that in the first embodiment.

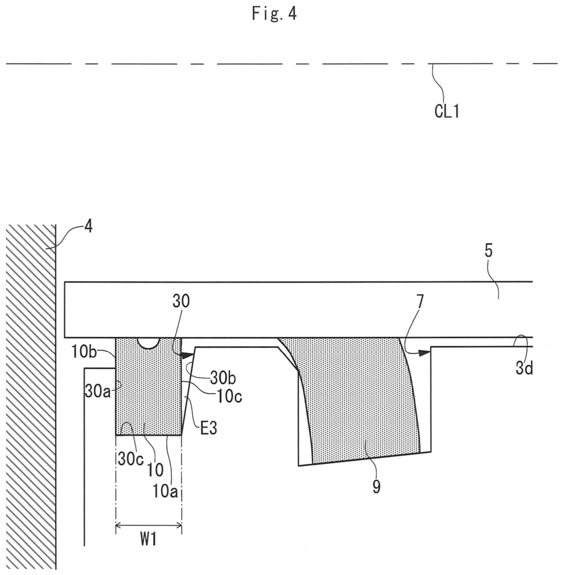

FIG. 4 shows a third embodiment of the invention, and a dust seal mounting groove 30 has a cylinder hole opening-side surface 30a, a cylinder hole bottom-side surface 30b, and a mounting groove bottom surface 30c. The cylinder hole opening-side surface 30a is formed in the direction intersecting the cylinder axis CL1, and the mounting groove bottom surface 30c is formed parallel to the cylinder axis CL1.

In the present embodiment, the cylinder hole bottom-side surface 30b constitutes the regulating section, and is formed as a conical surface in which an inner diameter of the dust seal mounting groove 30 around the cylinder axis CL1 gradually decreases from the mounting groove bottom surface 30c toward the cylinder hole bottom-side surface 30b. In addition, a length dimension W1 of the mounting groove bottom surface 30c in the cylinder axial direction is the same as the length dimension W1 of the outer peripheral surface 10a of the dust seal 10 in the cylinder axial direction.

Accordingly, the tip surface 10b of the dust seal 10 abuts against the cylinder hole opening-side surface 30a, the rear end surface 10c of the dust seal 10 on an outer peripheral surface side abuts against the cylinder hole bottom-side surface 30b (regulating section), and the movement of the dust seal 10 in the cylinder axial direction is regulated. In addition, when the disc brake 1 is not in operation, the rear end surface 10c is in a state of being separated from the cylinder hole bottom-side surface 30b, and a separation section E3 is formed between the rear end surface 10c and the cylinder hole bottom-side surface 30b.

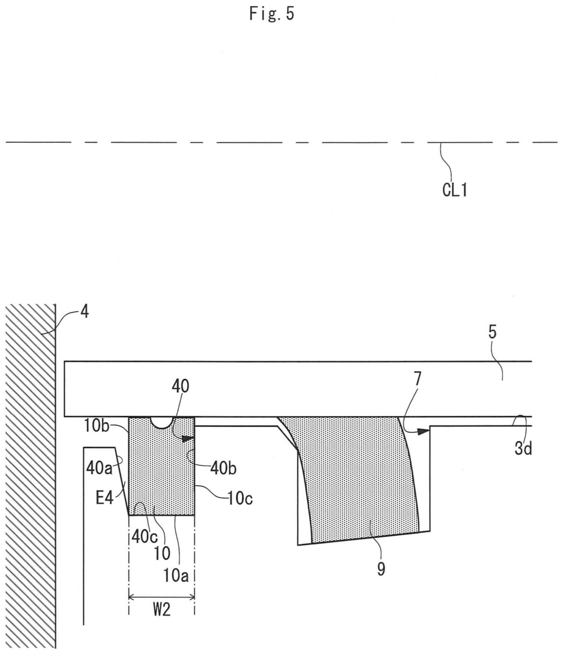

FIG. 5 shows a fourth embodiment of the invention, and a dust seal mounting groove 40 has a cylinder hole opening-side surface 40a, a cylinder hole bottom-side surface 40b, and a mounting groove bottom surface 40c. The cylinder hole bottom-side surface 40b is formed in the direction intersecting the cylinder axis CL1, and the mounting groove bottom surface 40c is formed parallel to the cylinder axis CL1.

In the present embodiment, the cylinder hole opening-side surface 40a constitutes the regulating section, and is formed as a conical surface in which an inner diameter of the dust seal mounting groove 40 around the cylinder axis CL1 gradually decreases from the mounting groove bottom surface 40c toward the cylinder hole opening-side surface 40a. In addition, a length dimension W2 of the mounting groove bottom surface 40c in the cylinder axial direction is the same as the length dimension W2 of the outer peripheral surface 10a of the dust seal 10 in the cylinder axial direction.

Accordingly, the tip surface 10b of the dust seal 10 on the outer peripheral surface side abuts against the cylinder hole opening-side surface 40a (regulating section), the rear end surface 10c of the dust seal 10 abuts against the cylinder hole bottom-side surface 40b, and the movement of the dust seal 10 in the cylinder axial direction is regulated. In addition, when the disc brake 1 is not in operation, the tip surface 10b is in a state of being separated from the cylinder hole opening-side surface 40a, and a separation section E4 is formed between the tip surface 10b and the cylinder hole opening-side surface 40a.

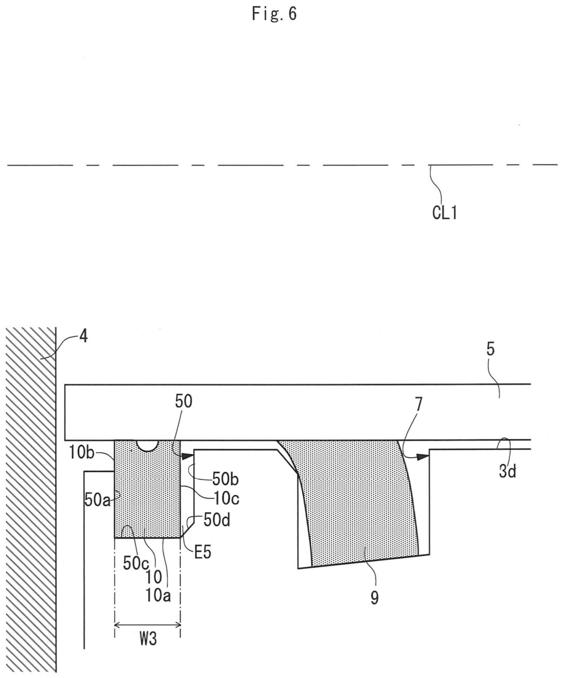

FIG. 6 shows a fifth embodiment of the invention, and a dust seal mounting groove 50 has a cylinder hole opening-side surface 50a and a cylinder hole bottom-side surface 50b formed in the direction intersecting the cylinder axis CL1, and a mounting groove bottom surface 50c formed parallel to the cylinder axis CL1. Further, a regulating section 50d is provided at a corner portion between the mounting groove bottom surface 50c and the cylinder hole bottom-side surface 50b.

The regulating section 50d is formed as a conical surface in which an inner diameter of the dust seal mounting groove 50 around the cylinder axis CL1 gradually decreases from the mounting groove bottom surface 50c toward the cylinder hole bottom-side surface 50b. In addition, a length dimension W3 of the mounting groove bottom surface 50c in the cylinder axial direction is the same as the length dimension W3 of the outer peripheral surface 10a of the dust seal 10 in the cylinder axial direction.

Accordingly, the tip surface 10b of the dust seal 10 abuts against the cylinder hole opening-side surface 50a, the rear end surface 10c of the dust seal 10 on the outer peripheral surface side abuts against the regulating section 50d, and the movement of the dust seal 10 in the cylinder axial direction is regulated. In addition, when the disc brake 1 is not in operation, the rear end surface 10c is in a state of being separated from the cylinder hole bottom-side surface 50b, and a separation section E5 is formed between the rear end surface 10c and the cylinder hole bottom-side surface 50b.

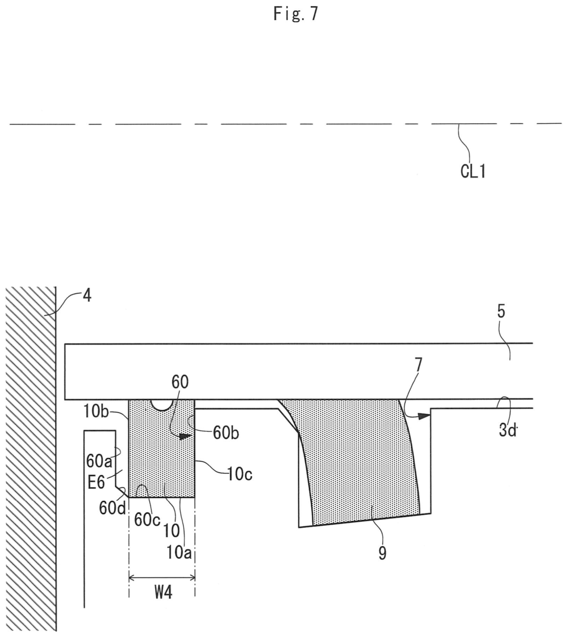

FIG. 7 shows a sixth embodiment of the invention, and a dust seal mounting groove 60 has a cylinder hole opening-side surface 60a and a cylinder hole bottom-side surface 60b formed in the direction intersecting the cylinder axis CL1, and a mounting groove bottom surface 60c formed parallel to the cylinder axis CL1. Further, a regulating section 60d is provided at a corner portion between the mounting groove bottom surface 60c and the cylinder hole opening-side surface 60a.

The regulating section 60d is formed as a conical surface in which an inner diameter of the dust seal mounting groove 60 around the cylinder axis CL1 gradually decreases from the mounting groove bottom surface 60c toward the cylinder hole opening-side surface 60a. In addition, a length dimension W4 of the mounting groove bottom surface 60c in the cylinder axial direction is the same as the length dimension W4 of the outer peripheral surface 10a of the dust seal 10 in the cylinder axial direction.

Accordingly, the tip surface 10b of the dust seal 10 on the outer peripheral surface side abuts against the regulating section 60d, the rear end surface 10c of the dust seal 10 abuts against the cylinder hole bottom-side surface 60b, and the movement of the dust seal 10 in the cylinder axial direction is regulated. In addition, when the disc brake 1 is not in operation, the tip surface 10b is in a state of being separated from the cylinder hole opening-side surface 60a, and a separation section E6 is formed between the tip surface 10b and the cylinder hole opening-side surface 60a.

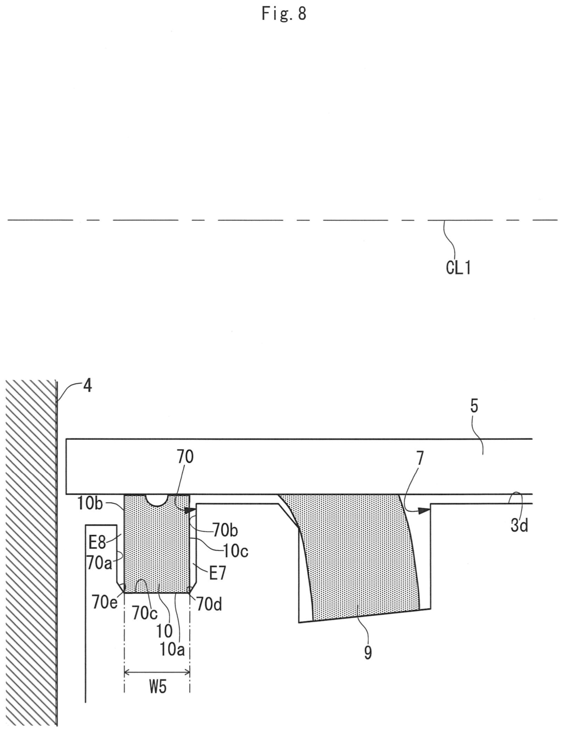

FIG. 8 shows a seventh embodiment of the invention, and a dust seal mounting groove 70 has a cylinder hole opening-side surface 70a and a cylinder hole bottom-side surface 70b formed in the direction intersecting the cylinder axis CL1, and a mounting groove bottom surface 70c formed parallel to the cylinder axis CL1. Further, a first regulating section 70d is provided at a corner portion between the mounting groove bottom surface 70c and the cylinder hole bottom-side surface 70b, and a second regulating section 70e is provided at a corner portion between the mounting groove bottom surface 70c and the cylinder hole opening-side surface 70a.

The first regulating section 70d is formed as a conical surface in which an inner diameter of the dust seal mounting groove 70 around the cylinder axis CL1 gradually decreases from the mounting groove bottom surface 70c toward the cylinder hole bottom-side surface 70b. The second regulating section 70e is formed as a conical surface in which the inner diameter of the dust seal mounting groove 70 around the cylinder axis CL1 gradually decreases from the mounting groove bottom surface 70c toward the cylinder hole opening-side surface 70a. In addition, a length dimension W5 of the mounting groove bottom surface 70c in the cylinder axial direction is the same as the length dimension W5 of the outer peripheral surface 10a of the dust seal 10 in the cylinder axial direction.

Accordingly, the tip surface 10b of the dust seal 10 on the outer peripheral surface side abuts against the second regulating section 70e, the rear end surface 10c of the dust seal 10 on the outer peripheral side abuts against the first regulating section 70d, and the movement of the dust seal 10 in the cylinder axial direction is regulated. In addition, when the disc brake 1 is not in operation, the rear end surface 10c is in a state of being separated from the cylinder hole bottom-side surface 70b, and a first separation section E7 is formed between the rear end surface 10c and the cylinder hole bottom-side surface 70b. In addition, when the disc brake 1 is not in operation, the tip surface 10b is in a state of being separated from the cylinder hole opening-side surface 70a, and a second separation section E8 is formed between the tip surface 10b and the cylinder hole opening-side surface 70a.

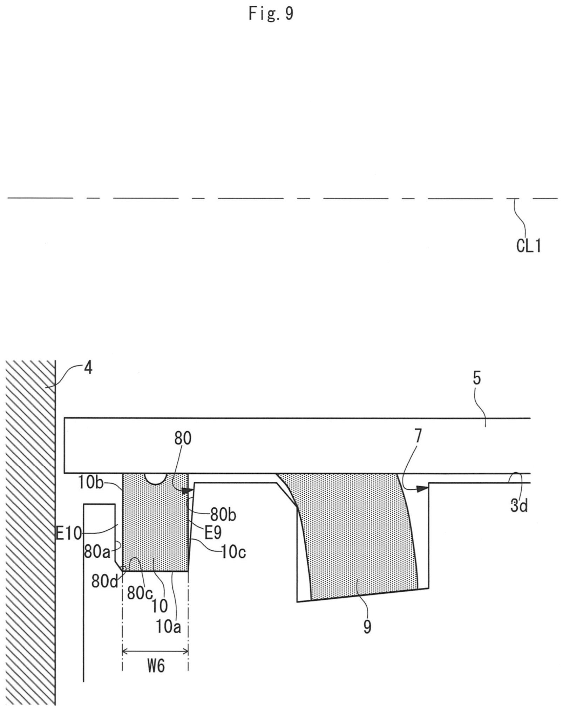

FIG. 9 shows an eighth embodiment of the invention, and a dust seal mounting groove 80 has a cylinder hole opening-side surface 80a, a cylinder hole bottom-side surface 80b, and a mounting groove bottom surface 80c. The cylinder hole opening-side surface 80a is formed in the direction intersecting the cylinder axis CL1, and the mounting groove bottom surface 80c is formed parallel to the cylinder axis CL1.

The cylinder hole bottom-side surface 80b constitutes a first regulating section, and is formed as a conical surface in which an inner diameter of the dust seal mounting groove 80 around the cylinder axis CL1 gradually decreases from the mounting groove bottom surface 80c toward the cylinder hole bottom-side surface 80b.

Further, a second regulating section 80d is provided at a corner portion between the cylinder hole opening-side surface 80a and the mounting groove bottom surface 80c. The second regulating section 80d is formed as a conical surface in which the inner diameter of the dust seal mounting groove 80 around the cylinder axis CL1 gradually decreases from the mounting groove bottom surface 80c toward the cylinder hole opening-side surface 80a.

In addition, a length dimension W6 of the mounting groove bottom surface 80c in the cylinder axial direction is the same as the length dimension W6 of the outer peripheral surface 10a of the dust seal 10 in the cylinder axial direction.

Accordingly, the tip surface 10b of the dust seal 10 on the outer peripheral surface side abuts against the second regulating section 80d, the rear end surface 10c of the dust seal 10 on the outer peripheral side abuts against the cylinder hole bottom-side surface 80b (first regulating section), and the movement of the dust seal 10 in the cylinder axial direction is regulated. In addition, when the disc brake 1 is not in operation, the rear end surface 10c is in a state of being separated from the cylinder hole bottom-side surface 80b, and a first separation section E9 is formed between the rear end surface 10c and the cylinder hole bottom-side surface 80b. In addition, when the disc brake 1 is not in operation, the tip surface 10b is in a state of being separated from the cylinder hole opening-side surface 80a, and a second separation section E10 is formed between the tip surface 10b and the cylinder hole opening-side surface 80a.

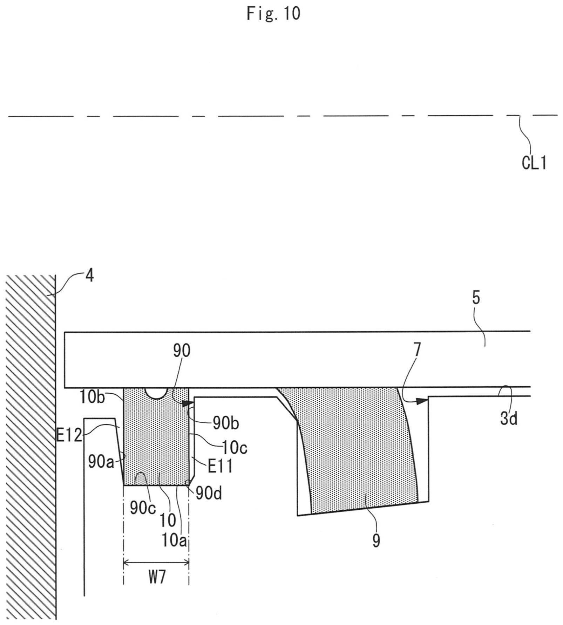

FIG. 10 shows a ninth embodiment of the invention, and a dust seal mounting groove 90 has a cylinder hole opening-side surface 90a, a cylinder hole bottom-side surface 90b, and a mounting groove bottom surface 90c. The cylinder hole bottom-side surface 90b is formed in the direction intersecting the cylinder axis CL1, and the mounting groove bottom surface 90c is formed parallel to the cylinder axis CL1.

The cylinder hole opening-side surface 90a constitutes a first regulating section, and is formed as a conical surface in which an inner diameter of the dust seal mounting groove 90 around the cylinder axis CL1 gradually decreases from a mounting groove bottom surface 90c side toward the cylinder hole opening-side surface 90a.

Further, a second regulating section 90d is provided at a corner portion between the cylinder hole bottom-side surface 90b and the mounting groove bottom surface 90c. The second regulating section 90d is formed as a conical surface in which the inner diameter of the dust seal mounting groove 90 around the cylinder axis CL1 gradually decreases from the mounting groove bottom surface 90c toward the cylinder hole bottom-side surface 90b.

In addition, a length dimension W7 of the mounting groove bottom surface 90c in the cylinder axial direction is the same as the length dimension W7 of the outer peripheral surface 10a of the dust seal 10 in the cylinder axial direction.

Accordingly, the tip surface 10b of the dust seal 10 on the outer peripheral surface side abuts against the cylinder hole opening-side surface 90a (first regulating section), the rear end surface 10c of the dust seal 10 on the outer peripheral side abuts against the second regulating section 90d, and the movement of the dust seal 10 in the cylinder axial direction is regulated. In addition, when the disc brake 1 is not in operation, the rear end surface 10c is in a state of being separated from the cylinder hole bottom-side surface 90b, and a first separation section E11 is formed between the rear end surface 10c and the cylinder hole bottom-side surface 90b. In addition, when the disc brake 1 is not in operation, the tip surface 10b is in a state of being separated from the cylinder hole opening-side surface 90a, and a second separation section E12 is formed between the tip surface 10b and the cylinder hole opening-side surface 90a.

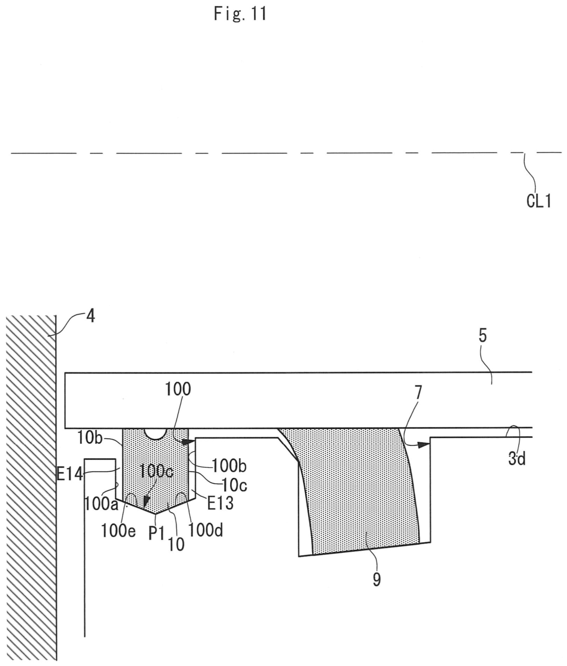

FIG. 11 shows a tenth embodiment of the invention, and a dust seal mounting groove 100 has a cylinder hole opening-side surface 100a and a cylinder hole bottom-side surface 100b formed in the direction intersecting the cylinder axis CL1, and a mounting groove bottom surface 100c formed between the cylinder hole bottom-side surface 100b and the cylinder hole opening-side surface 100a.

The mounting groove bottom surface 100c constitutes a regulating section, and includes a first conical surface 100d in which an inner diameter of the dust seal mounting groove 100 around the cylinder axis CL1 gradually decreases from a cylinder axial center portion P1 of the mounting groove bottom surface 100c toward the cylinder hole bottom-side surface 100b, and a second conical surface 100e in which the inner diameter of the dust seal mounting groove 100 around the cylinder axis CL1 gradually decreases from the cylinder axial center portion P1 of the mounting groove bottom surface 100c toward the cylinder hole opening-side surface 100a.

The dust seal 10 is mounted in the dust seal mounting groove 100 by aligning positions of a cylinder axial center portion of the dust seal 10 and the cylinder axial center portion P1 of the mounting groove bottom surface 100c.

Accordingly, a cylinder hole bottom portion side and the cylinder hole opening side of the dust seal 10 are in a state of being compressed between the piston 5 and the first conical surface 100d and in a state of being compressed between the piston 5 and the second conical surface 100e, the outer peripheral surface 10a of the dust seal 10 and the mounting groove bottom surface 100c of the dust seal mounting groove 100 are in close contact with each other, and the movement of the dust seal 10 in the cylinder axial direction is regulated. In addition, when the disc brake 1 is not in operation, the rear end surface 10c is in a state of being separated from the cylinder hole bottom-side surface 100b, and a separation section E13 is formed between the rear end surface 10c and the cylinder hole bottom-side surface 100b. In addition, when the disc brake 1 is not in operation, the tip surface 10b is in a state of being separated from the cylinder hole opening-side surface 100a, and a separation section E14 is formed between the tip surface 10b and the cylinder hole opening-side surface 100a.

According to the invention, as in the embodiments described above, by providing the regulating section in the dust seal mounting groove, the dust seal can be disposed at any position in the dust seal groove in a state in which the movement in the cylinder axial direction is regulated, and the roll-back amount of the piston can be stabilized while minimizing the costs. Further, the roll-back amount can be freely set in consideration of the protrusion amount of the dust seal during braking that changes according to a mounting position of the dust seal.

As described above, the disc brake according to the invention is not limited to the disc brake in which the action portion including the piston and the reaction portion including the reaction force claw are disposed to face each other on both sides of the disc rotor, but may be a disc brake in which action portions including the piston are disposed to face each other on both sides of the disc rotor, and the number of pistons is any number.

### Reference Signs List

1: disc brake
2: disc rotor
3: caliper body
3a: action portion
3b: reaction portion
3c: bridge portion
3d: cylinder hole
3e: reaction force claw
4: friction pad
5: piston
6: hydraulic pressure chamber
7: piston seal mounting groove
8: dust seal mounting groove
8a: cylinder hole opening-side surface
8b: cylinder hole bottom-side surface
8c: mounting groove bottom surface (regulating section)
9: piston seal
10: dust seal
10a: outer peripheral surface
10b: tip surface
10c: rear end surface
10d: piston abutting surface
10e: annular recess
20: dust seal mounting groove
20c: mounting groove bottom surface (regulating section)
30: dust seal mounting groove
30b: cylinder hole bottom-side surface (regulating section)
40: dust seal mounting groove
40a: cylinder hole opening-side surface (regulating section)
50: dust seal mounting groove
50d: regulating section
60: dust seal mounting groove
60d: regulating section
70: dust seal mounting groove
70d: first regulating section
70e: second regulating section
80: dust seal mounting groove
80b: cylinder hole bottom-side surface (first regulating section)
80d: second regulating section
90: dust seal mounting groove
90a: cylinder hole opening-side surface (first regulating section)
90d: second regulating section
100: dust seal mounting groove
100c: mounting groove bottom surface (regulating section)

## Claims

1. A disc brake in which a piston seal is mounted in a cylinder hole provided in a caliper body, a dust seal mounting groove is formed closer to a cylinder hole opening side than the piston seal, and a dust seal is mounted in the dust seal mounting groove, the dust seal abutting against an outer peripheral surface of a piston inserted into the cylinder hole and preventing dust from entering the cylinder hole, wherein
the dust seal mounting groove has a cylinder hole opening-side surface and a cylinder hole bottom-side surface formed in a direction intersecting a cylinder axis, and a mounting groove bottom surface formed between the cylinder hole bottom-side surface and the cylinder hole opening-side surface,
when the disc brake is not in operation, the dust seal is mounted at a position separated from at least one of the cylinder hole opening-side surface and the cylinder hole bottom-side surface, and
the dust seal mounting groove is provided with a regulating section that regulates a movement of the dust seal in a cylinder axial direction.

2. The disc brake according to claim 1, wherein
the regulating section is provided between the mounting groove bottom surface and at least one of the cylinder hole opening-side surface and the cylinder hole bottom-side surface.

3. The disc brake according to claim 1, wherein
the regulating section is provided at at least one of a corner portion between the mounting groove bottom surface and the cylinder hole opening-side surface and a corner portion between the mounting groove bottom surface and the cylinder hole bottom-side surface, and
the regulating section is formed as a conical surface in which an inner diameter of the dust seal mounting groove around the cylinder axis gradually decreases from the mounting groove bottom surface toward at least one of the cylinder hole opening-side surface and the cylinder hole bottom-side surface.

4. The disc brake according to claim 1, wherein
the regulating section is configured by forming the mounting groove bottom surface as a conical surface in which an inner diameter of the dust seal mounting groove around the cylinder axis gradually decreases toward at least one of the cylinder hole opening-side surface and the cylinder hole bottom-side surface.

5. The disc brake according to claim 1, wherein
the regulating section is configured by forming the cylinder hole bottom-side surface as a conical surface in which an inner diameter of the dust seal mounting groove around the cylinder axis gradually decreases from the mounting groove bottom surface side toward the cylinder hole bottom-side surface.

6. The disc brake according to claim 1, wherein
the regulating section is configured by forming the cylinder hole opening-side surface as a conical surface in which an inner diameter of the dust seal mounting groove around the cylinder axis gradually decreases from the mounting groove bottom surface side toward the cylinder hole opening-side surface.

7. The disc brake according to claim 1, wherein
the regulating section includes
a first regulating section configured by forming the cylinder hole bottom-side surface as a conical surface in which an inner diameter of the dust seal mounting groove around the cylinder axis gradually decreases from the mounting groove bottom surface side toward the cylinder hole bottom-side surface, and
a second regulating section provided at a corner portion between the mounting groove bottom surface and the cylinder hole opening-side surface and formed as a conical surface in which the inner diameter of the dust seal mounting groove around the cylinder axis gradually decreases from the mounting groove bottom surface toward the cylinder hole opening-side surface.

8. The disc brake according to claim 1, wherein
the regulating section includes
a first regulating section configured by forming the cylinder hole opening-side surface as a conical surface in which an inner diameter of the dust seal mounting groove around the cylinder axis gradually decreases from the mounting groove bottom surface side toward the cylinder hole opening-side surface, and
a second regulating section provided at a corner portion between the mounting groove bottom surface and the cylinder hole bottom-side surface and formed as a conical surface in which the inner diameter of the dust seal mounting groove around the cylinder axis gradually decreases from the mounting groove bottom surface toward the cylinder hole bottom-side surface.

9. The disc brake according to claim 1, wherein
when the disc brake is not in operation, the dust seal is mounted at a position separated from the cylinder hole opening-side surface.

10. The disc brake according to claim 1, wherein
the dust seal is formed to have a rectangular cross section in which an inner peripheral surface abutting against the mounting groove bottom surface, a tip surface facing the cylinder hole opening-side surface, and a rear end surface facing the cylinder hole bottom-side surface are flat surfaces, respectively.
